# EUROPEAN PATENT APPLICATION

(11) **EP 1 946 874 A1**
(43) Date of publication of application: **23.07.2008**
(21) Application number: 07100568.0
(22) Date of filing: 16.01.2007
(51) Int. Cl.: B23H 1/08

(54) **Method and devices designed to treat defects of the residual white layer left by the electrical discharge machining process**

(71) Applicant: CHARMILLES TECHNOLOGIES S.A., 1217 Meyrin 1 (CH)
(72) Inventor: Perez Pinaya, Roberto, 1208, Genève (CH); Cusanelli, Giuseppe, 1022, Chavannes-près-Renens (CH); Roland, Martin, 74520, Dingy en Vuache (FR)
(74) Representative: Weiss, Wolfgang

(57) **Abstract**

The invention is related to a surface treatment method employing electrical discharges, of which the parameters are chosen so as to minimize the removal of material and to counteract the phenomenon of localization, discharges which strike in an intermediate space between a tool-electrode and a part-electrode, or gap, filled with a dielectric liquid and enabling defects to be eliminated associated with the residual white layer produced by electrical discharge machining during resolidification of part of the material melted by the erosive sparks and to obtain, at the surface of part-electrode, a non-crystalline amorphous structure that can replace all or part of said white layer,
said method being characterized by the use of two types of powder,
the first type consisting of nanometric sized particles,
the second type consisting of micrometric sized particles,
and the size distributions of the particles of the first and second types being different.

## Description

The often harmful presence of a white layer and a thermally affected layer have been observed on the surface of parts machined by electrical discharge machining since this method was first used. The first is in particular saturated with carbon by the rupture or cracking of hydrocarbon molecules constituting the dielectric. The thermally affected layer becomes deeper as the proportion of metal previously vaporized or liquefied by the discharge becomes resolidified, as the discharge energy is higher, and also as the metal of the machined part dissipates heat with greater difficulty.

On account of this, steels machined by electrical discharge undergo excessive hardening of their surfaces. Stresses appear there causing crazing, cracks and cavities that are as such the starting point of breaks likely to weaken tools produced by the method.

The disturbance affecting the machined surface is thus produced during resolidification on the surface of part of the material that has been vaporized or melted by sparks. It is directly linked to the manner in which the generator is used, particularly the power employed as well as the sequences for controlling the voltage and current pulses.

In the case of steel parts, the fusion process and contact with the hydrocarbon-based dielectric modifies the composition of the metal and promotes the formation of brittle iron carbides. On the other hand the fusion and resolidification cycle produces metastable austenitic and martensitic phases. The latter phases are particularly brittle and incorporate high residual stresses caused by an expansion effect of their crystalline structure during its formation. Finally, as the machined surface after finishing is mainly formed of iron carbides and austenite with a high residual tensile stress, it is possible for any additional stress derived from martensitic expansion to start a crack at the interface with the thermally affected zone (not melted by sparks) which will easily become propagated on the surface through these iron carbide and austenitic phases.

It is usually recommended to multiply the finishing stages in order to reduce surface defects; in other words to provide a graduation of regimes that is as fine as possible. Polishing operations also make it possible to eliminate the white and thermally affected layers left by the last finishing regime. It is also usual to apply various heat treatments to the polished surfaces in order to stabilize them. These operations require many mechanical actions and remain very costly.

The object of the present invention is to treat defects produced during semi-finishing steps by electrical discharge machining as well as to prevent the formation of such defects during the final finishing steps. This result is obtained by a modification of the surface with the aid of discharges so as to produce an amorphous structure distributed in a regular manner over all the surface of the part to be treated.

The amorphous character concerns the spatial arrangement of atoms in the material. While the crystalline state is defined by a periodic pattern of atomic or molecular scale in three directions in space, the amorphous structure is characterized on the other hand, as in glass, by a random clustering of molecules or atoms arranged without any apparent rule. This amorphous character of surfaces created in this way determines the surprising mechanical properties linked to their exceptional isotropy, as will be stated below.

### Statement of the known prior art.

Surface modification methods are known, which have been developed with the object of improving mechanical properties and of reducing the density of cracks.

Document US 4,948,625 mentions the surprising property that amorphous alloys have of combining very high hardness with toughness. One method of producing such amorphous steel alloys is proposed by means of a method employing electric discharges and using electrodes produced from metalloids or metals such as silicon. germanium, bismuth or zirconium. Since the electrode consists of a material with a high electrical resistivity, a large number of very small electrical discharges start simultaneously over the entire surface of the part to be treated, providing uniformity of the treatment while preventing in this way localization of discharges and this while producing a high yield. This method however has the disadvantage that it requires the production, for each application, of an electrode with a special form in costly materials that are poorly suited to machining with cutting tools. In addition, the method is only intended for parts machined by electrical discharge and consequently shape matching between the special electrode and the part to be treated is not ensured, which can make the uniformity of treatment problematic.

The method described in EP 0 548 932 uses suspensions in the dielectric of powders based on metallic elements or semiconductors making it possible to arrive at crack-free surfaces, obtained by making use of the effect of enlarging the gap by adjusting the concentration of powders associated with the use of low-energy regimes and the use of high voltage ignition units. Since the mean size of active particles is 20 to 40 microns, it will be difficult under these conditions to create amorphous layers at low finishing energy levels.

The publication "Surface Modification of tool steels by alloying method using EDM process" K.Masui et al, Proc. ISEM XI, p.419, 1995 presents a method using suspensions in the dielectric of micrometric powders of W with a mean diameter of 1.3 microns in order to produce surface alloys on a steel part of the AISI-M2 type. Taking into account the composition of this base steel with 6% by weight of W, the method ends in obtaining a lightly alloyed layer with a maximum of less than 4% by weight of a W addition on the surface. In addition, the alloys formed at the surface are crystalline compounds of the WC and W₃C type. Although these contribute to an improvement in surface hardness, they are not tough and embrittle the white layer as regards the propagation of cracks through this. Finally, since they are in an insufficient and non-homogeneous quantity, the wear resistance properties of the surface are not significantly improved.

Document US 5,922,221 describes a method using shaped electrodes and a suspension of titanium carbide powder (TiC) in the dielectric liquid. The sizes of active particles lie between 0.3 and 1.2 microns. The electrical circuit close to the gap is fitted with a cabinet containing passive tuning elements making it possible to prevent signal instabilities during the current discharge. However, the author does not mention the appearance of an amorphous alloy, which could be due to a lack of means enabling the necessary particles to be introduced during fusion and for retaining them after resolidification. Document US 6,501,232 describes a method employing a special electrode containing the elements necessary for obtaining the transformed surface layer. As already stated, the production of a special electrode for each application is of necessity costly. In addition, since the necessary material at the surface layer must be taken up on the special electrode, the invention recommends current pulse forms that promote a high wear of this. Apart from the fact that the current should have a decreasing form and should essentially comprise two distinct periods, the document does not give a precise indication of the way to control the current pulses.

### Summary of the invention

The present invention relates to a method for modifying a surface which aims at avoiding the disadvantages of the known solutions outlined above, in particular of solving the problems of the suitable quantity of amorphous alloy formed as a replacement for the white layer and its homogeneity. The method improves the quality of treated alloys by a considerable increase in macroscopic wear and corrosion resistance effects. By virtue of the amorphous structure created at their surface, tools commonly produced with the electrical discharge machining method acquire a hardness and toughness that enables them to withstand violent stresses to which they are subjected. The method widens the possible variants of amorphous alloys adapted to various applications.

The invention proposes the use of a dielectric preferably based on hydrocarbon oils currently used in electrical discharge machining containing a suspension of powders consisting of a particular choice of metals, oxides, carbides, nitrides, borides or rare earths which determine the appearance of the amorphous structure.

A second type of powder is used with the aim of guaranteeing the homogeneity of surface treatment. It consists of micrometric powders of graphite, carbon or aluminium in various forms, that can also be mixed into the dielectric liquid or can cover the electrode or part in the form of a fine uniform layer.

So that particles of the second type produce their homogenizing effect, it is necessary for their mean size to be in relation to the gap and their size distribution to be different from the size distribution of the nanometric particles.

The energy of discharges during the final finishing regimes should be adjusted in relation to the mean size of the nanoparticles. Moreover, the electrical parameters are chosen so as, on the one hand to minimize the removal of material and on the other hand to reinforce the effect produced by the micrometric powders which opposes the phenomenon of the localization of discharges. These two effects are preferably obtained by creating conditions which encourage spontaneous extinction of the electrical discharge machining plasma. More precisely, such conditions are obtained by adjusting the various levels of the current pulse in proportion to the typical extinction current value of electrode materials and by employing a particular sequence for controlling the voltage/current pulses.

For a fixed discharge energy, the quantity of alloy can in particular be increased by using current pulses during the finishing stage of which the decay function is given by an adjustable slope less than a certain limit, preferably with negative polarity.

The present invention also relates to a generator for electrical discharge machining comprising at least one voltage/current source connected to the machining gap by an electrical circuit adapted so that no transitory oscillation can bring about extinction of the electrical discharge machining plasma. Said generator is arranged so as to generate electrical pulses between a tool electrode and a part electrode constituting the poles of a machining gap and in order to establish ignition of electrical discharges there. It is characterized in that its parameters are adjusted so as to minimize the removal of material and to promote the spontaneous extinction of the electrical discharge machining plasma.

The invention also relates to the use of a charge of particles intended for the preparation of the electrical discharge machining liquid. Said charge is composed of a mixture of nanometric and micrometric particles agglomerated by means of an easily handled paste.

The method makes it possible to arrive at a white layer with an amorphous surface free from defects such as cracks or cavities, and possessing remarkable mechanical properties of hardness and wear resistance. Moreover, the converted white layer is uniformly distributed over all the surface to be treated, with very small roughness for machining times less than those for standard machining. The result can be obtained with the aid of shaped electrodes, commonly made of copper, used during the rough machining and semi-finishing phases and therefore without the necessity of producing special electrodes containing the element constituting the amorphous alloy.

Other advantages will appear from the features expressed in the dependent claims and of the description disclosing the invention in greater detail with the aid of figures which show the metallurgical results obtained, or diagrams representing examples of preferred embodiments.

### Presentation of the figures

Figure 1: transmission electron micrography of a layer through the surface structure of a steel part machined by the standard electrical discharge machining method.
Figures 2a, 2b, 2c, 2d, 2e: various aspects of a transmission electron micrograph of a layer through the surface structure of a steel part machined by the method according to the invention with the aid of a suspension of nanopowders of TiN, with a mean diameter of 60 nm.
Figure 3: backscatter electron micrography of a white layer illustrating the phenomenon of stopping the propagation of a crack by the amorphous layer according to the invention.
Figure 4: diagrammatic representation of the time sequencing of voltage/current signals delivered by an electrical discharge machining generator according to the invention.
Figure 5: example of a diagram for controlling the rate of spontaneous extinction to a reference value TXref.
Figure 6: diagrammatic representation of a device or generator of electrical machining discharges enabling the invention to be implemented.

### Detailed description of the invention:

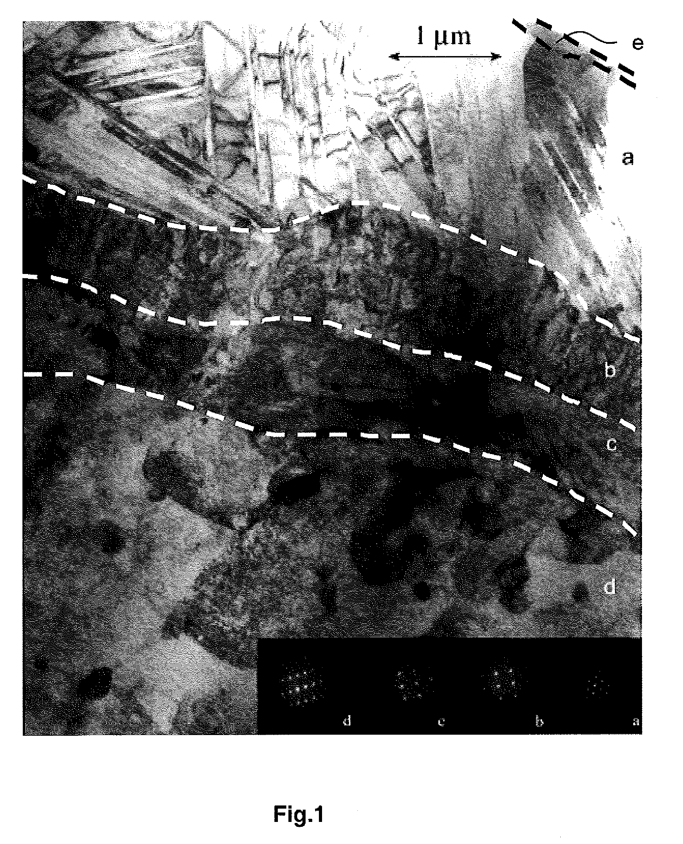

The structure of the white layer produced with electrical discharge machining strongly depends on the elements present in the fragment of molten metal coming from the part in contact with the plasma of the discharge. In the case of standard machining on steel without the use of additives, metastable phases such as austenite and martensite and iron carbides can be observed in figure 1 in the resolidified layer delimited by dotted lines. Various crystalline structures have been identified from measurements of electron diffraction spectra carried out on the various layers observed and which have been inserted in the lower right hand part of the image: the index "a" denotes the location of iron carbides, "b" residual austenite, "c" martensite and "d" ferrite or base material. An extremely fine amorphous layer "e" is observed on the surface.

These phases tell us that the steel has been radically transformed by the rapid resolidification process that has occurred after extinction of the plasma and during which carbon atoms coming from the decomposition of the dielectric have become introduced into the new structure. Carbon-rich phases (carbides) are found naturally situated at the surface of the white layer. Below, the composition is dominated by austenite which is a metastable phase produced between 700 and 900°C. At lower temperatures, during thermalization, part of this austenitic component is transformed into martensite. The structure of the white layer is mainly crystalline.

The crystalline structure observed is due to the very particular context and the resolidification kinetics of the white layer, which in reality is formed starting from the base material and progressing to the surface. This phenomenon should be attributed to the excellent heat transfer by conduction at the interface between the white layer and the metal of the part, as opposed to the poor transfer of heat by convection at the interface between the white layer and the interelectrode medium containing hydrocarbon vapours and the plasma during extinction.

These dynamics assign nucleation sites at the interface between the alloy in the liquid and solid state. Since the base material has a crystalline structure, the various phases of the white layer will have a tendency also to be made of a structure of the same type and this surprisingly in spite of the very high solidification rates.

The structure obtained at the surface of steels therefore presents different characteristics which change according to the distance from the surface, in the white layer and then in the thermally affected zone. These differences in connected structures lead to high tensile stresses at the surface of the part which, associated with the properties of low ductility and low toughness of the phase present, causes cracking and makes this layer brittle.

The novel method according to the invention, delivering relatively large quantities of active elements in the form of nanopowders at the very place where melting of the fragment of metal to be treated is produced, brings about the appearance of amorphous alloys at the surface, while other methods employing suspensions lead to the formation of new crystalline alloys.

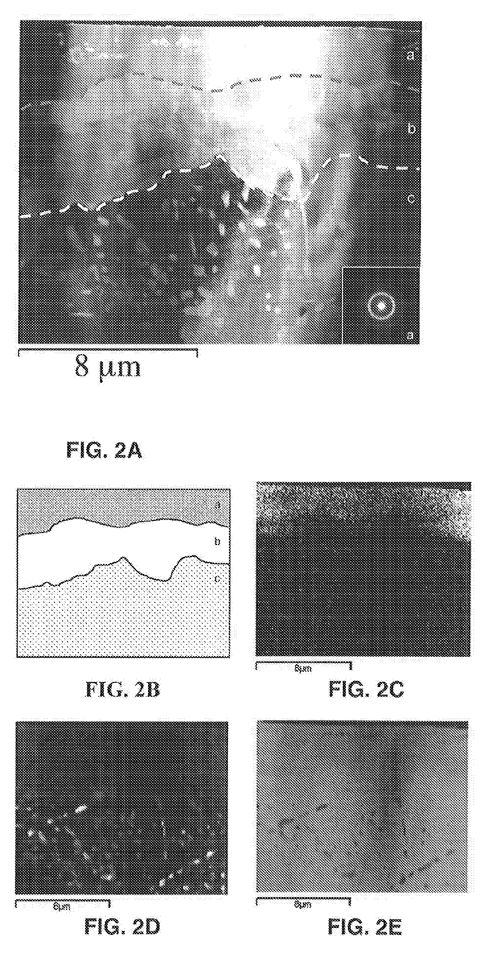

Fig, 2A shows a scanning transmission electron micrograph (STEM) of the section of a white layer obtained by the method for modifying the surface in a suspension of nanopowders of TiN with a mean diameter of 60 nm. In this figure, an amorphous structure "a" is identified at the surface of the sample, characterized in that its diffraction spectrum, inserted in the lower right hand part of figure 2A, does not produce a network of diffraction points as those that are produced for example by the various crystalline phases of the steel identified in figure 1. On the other hand, below this amorphous layer, a crystalline structure "b" can be distinguished on the white layer and, at the lowest level, another crystalline structure "c" corresponding to the base material. Scanning of the same section by electron microprobe makes it possible to identify the distribution of the elements present in this white layer. Figs. 2C, 2D and 2E show the results of these analyses for the elements Ti, Cr and Fe respectively. The quantity of each element is proportional to the luminous intensity on the micrographs. Fig. 2B reproduces approximately the amorphous and crystalline zones identified in figure 2A so as to place the elements in a given structure. It is thus observed that for the amorphous part "a" the largest component identified in figure 2C is titanium.

On the other hand, chromium of the base steel is absent in the zones "a" and "b" defining the white layer, but is present in the zone "c". Iron is itself present over all the section but in a minor quantity in the white layer due to the alloying phenomenon with nanopowders and carbon of the dielectric.

Since the desired surface modification should be made on volumes of melting metal which have dimensional scales of the order of a micron, this makes it essential to use powders with a nanometric size in the dielectric suspension. Particles with a larger diameter will not able to be incorporated in the alloy by reason of the speed of the process.

Although the effect of some elements is known to prevent the crystallization of iron alloys under non-extreme resolidification conditions, the same conditions prove to be insufficient in electrical discharge machining for producing homogeneous amorphous deposits.

The size and concentration of the elements which will form the amorphous alloy are essential conditions. Consequently, particles with a mean size between 1 nm and 1 micrometre are necessary, preferably between 1 nm and 300 nm in a volume concentration equivalent to a value between 0.1 and 50 g/l of carbon, preferably between 1 and 10 g/l in equivalent carbon volume.

Obtaining the amorphous alloy requires the disruption and disorganization of the crystalline structure that iron and carbon have the tendency to build naturally in order to form iron carbide. To this end, the atomic dimension of active elements of nanopowders must be sufficiently different from that of iron so as not to be substituted for it.

The difference between the atomic radii of the elements to be alloyed should be greater than 12% and their reaction enthalpies must be negative or exothermic. These conditions are mentioned for example by Inoue [Mater. Trans. JIM 36, 806 (1995)].

Consequently, the invention recommends the use of at least one powder of nanometric size belonging to the group W, C, Mo, Ni, Cr, Ti, Ge, TiC, TiN, Nb, Ta, Al, Zr, B or to the rare earth group such as Y or oxides such as Y₂O₃, TiO₂, Al₂O₃ or ZrO₂. Dielectrics based on hydrocarbons have the function of providing carbon to the surface alloy. Aqueous dielectrics require the supplementary provision of graphite, carbon, boron or yttrium powders or a compound containing carbon. By reason of greater ease of production, nanopowders of B₄C and TiB₂ can also be used instead of pure boron and titanium powders. Additions of nanopowders of chromium and nickel can reinforce the corrosion resistance of amorphous alloys. The use of several elements in a suspension still further promotes the formation of metallic glasses.

During the finishing process by electrical discharge machining, the alloy between the materials of the suspensions, carbon of the dielectric and elements of the steel has little time to form since these machining procedures use discharges that last a maximum of a few microseconds. The diffusion process of carbon and other elements into iron occurs by means of convection phenomena in the melted metals which mainly occur during the period of discharge but which extend for a further few microseconds after extinction. Long discharges are therefore necessary so as to give the liquid, which will form the white layer, sufficient time for the mixture to become homogenized, so as to integrate a high concentration of elements capable of promoting amorphization. The consequence is the use of discharges with spontaneous extinction which advantageously enable the duration of the plasma to be extended to the possible limits of the electrical discharge machining method.

A phenomenon that is usually desired becomes paradoxically harmful in the particular case of the invention. It consists of implosion of the plasma which occurs during extinction of the discharge and which usually causes material to be removed. It is in point of fact preferable to minimize the dispersion of the molten mixture in the dielectric liquid by the implosion effect and on the other hand to promote its migration to the surface of the part to be treated. This is why the invention recommends means making it possible to minimize the removal of material or the wear of one or other of the electrodes, and to promote the return of molten metal onto the part to be treated.

Encouraging spontaneous extinctions makes it possible to maintain the discharge in a minimum energy state over a period which enables the mixture to form and to minimize the implosion pressure, which constitutes an optimum combination for the formation of the amorphous alloy.

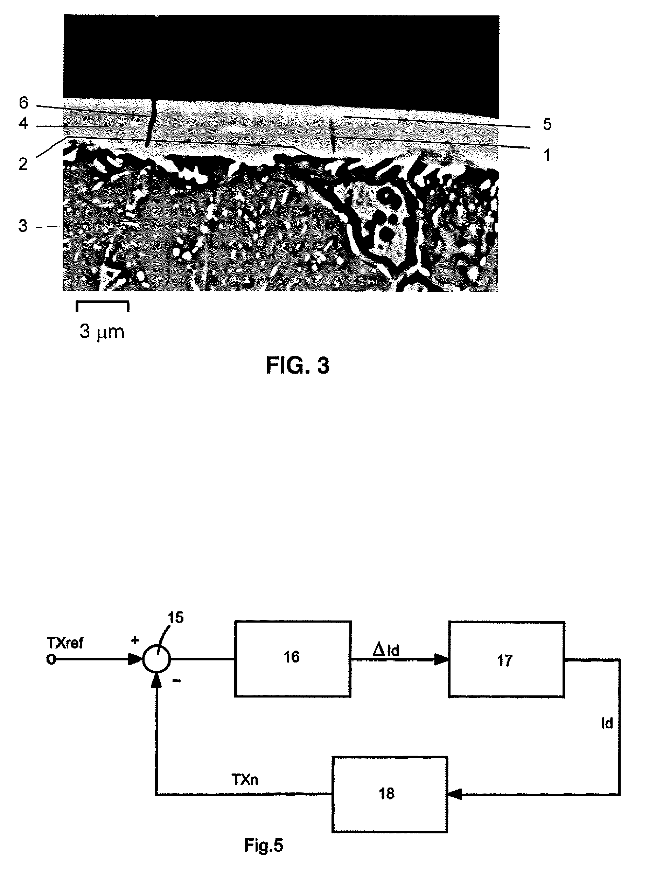

The most spectacular effect produced by amorphous alloys prepared by the invention is the phenomenon of crack stopping. Fig. 3 illustrates a non-homogeneous surface treatment containing amorphous tungsten alloy on the surface. The tungsten-rich amorphous structure 5 constitutes the lightest part of the white later and is delimited by an interface 2 with the base material 3. A crack 1 can be noted of which the propagation is stopped by the amorphous layer 5. In the absence of this amorphous phase, the left hand crack 6 can on the other hand be propagated along the crystalline zone 4 as far as the surface of the white layer. The presence of a homogeneous amorphous layer over all the surface to be treated is therefore essential for the quality of treatment.

It will be seen below how to guarantee regular deposition over all the surface to be treated, giving the part surprising properties, namely very high mechanical strength associated with extraordinary toughness. When the part is used, such an amorphous barrier 5 will constitute highly effective protection against cracking and wear.

Such properties are the result of a modification of the composition of the white layer of the steel. In the case of a steel part, this resolidified layer is in reality composed in its major part but mainly on the surface, of an amorphous alloy of Fe, C and the elements of the nanopowders, the latter coming from the dielectric liquid, resulting in amorphous alloys, for example Fe-W-C or Fe-Ti-C, while the crystalline phases situated below lack the same elements coming from the nanopowders. Compared with a standard surface, the surface layer consisting of carbides is transformed into an amorphous layer containing the materials of the nanopowders.

Measurements of nanoindentations and wear resistance confirm the properties of the surfaces modified with the aid of suspensions of nanopowders. In the case of Mo, the nanodensity of the finishing layer is 58 HRC, that is to say a value greater than that of a standard finishing layer of equivalent roughness (Ra 0.25µm) of approximately 52 HRC. As regards friction resistance, tribological tests carried out using hard metal spheres against a test surface with loads of 125 N for a humidity condition of 50% and temperature of 300°C give a result for wear 20 to 30% lower than standard layers. The effectiveness of the surface treatment is therefore proved by tests comparable to the stresses experienced by injection moulds in industrial applications.

Amorphous aluminium alloys can also be produced by the same method at the surface of parts constituting aluminium alloys currently machined by electrical discharge. The use of a couple of nanopowders of the rare earth type associated with a transition metal from the preceding list, as for example a Y+Mo mixture, will make it possible to produce thicker amorphous layers, the function of the rare earth being to prevent crystallization of the base aluminium alloy during cooling.

The size of the particles establishing the amorphous alloy suspended in the dielectric liquid is a parameter of first importance. Tests have shown that powders of micrometric size cannot produce the effect of amorphization and crack prevention such as described above with a machining regime using a lower power than is employed in finishing. The desired preventive effect is greater as the size of the active particles approaches a nanometre. The following table shows the quantity of the element alloyed on the surface and the linear density of cracks obtained following tests where suspensions have been used containing different mean diameters of tungsten powders.

| ***additive*** | ***Cracks passing through*/*cm*** | ***% weight of alloyed element*** |
|---|---|---|
| without additive | 100 | - |
| W 1-5 µm | 43 | 9 |
| W 0.9 µm | 28 | 14 |
| W 80 nm | 9 | 15 |

The roughness of surfaces obtained is 0.25 µm Ra. The thickness of the modified white layer is approximately 3.5 µm. For the last finishing regime, the standard dielectric is replaced by a liquid containing suspended nanoparticles, with the following machining conditions and parameters:
- Electrode: copper
- Steel treated: Böhler W300 (DIN X38CrMoV5-1). The chemical composition in % by weight: C 0.38, Si 1.10, Mn 0.40, Cr 5, Mo 1.3, V 0.4
- Negative polarity of the electrode
- Peak current: 3A
- Deposition current: 0.5A
- Average duration of the deposition current :4 µs
- Concentration of the additive to be alloyed: 2 g/l in equivalent carbon volume
- Area treated:2×2 cm²

In order to increase the quantity of element alloyed on the surface (3^{rd} column) the size of the particles should be reduced (1^{st} column). In order to reduce the linear density of cracks on the treated surfaces (2^{nd} column) the size of the particles should also be reduced.

The following table also gives the quantities of alloyed elements (3^{rd} column) at the surface and the linear densities of cracks (2^{nd} column) obtained following tests where suspensions of titanium nitride and molybdenum nitride were used as a comparison with a test without an additive. The three tests were carried out on the surfaces of 2×2 cm² parts.

| ***additive*** | ***Cracks passing through*/*cm*** | ***% weight of alloyed* element** |
|---|---|---|
| without additive | 100 | - |
| TiN-60 nm | 8 | 6 |
| Mo-80 nm | 0 | 25 |

The surprising result obtained with the molybdenum suspension should be noted, a result that other known methods have not made possible up to now. However, the presence of said nanometric particles in the machining liquid is insufficient alone to guarantee achievement of the desired surface treatment. Electrical discharge machining has risks of localization, especially in finishing, that is to say there is the risk of surface treatment being limited to partial zones of the part (c.f. Fig. 3). The presence of nanoparticles alone does not make it possible to produce uniform ignition distribution as is known from various artificial contaminants. Indeed, the fact of working practically without removing material implies that contamination in the gap will only consist of nanoparticles and possibly of machining debris of a comparable size. The gap defined by these particles, typically of the same order of magnitude, will therefore be too small compared with the irregularities of the electrode and the part, especially when the surfaces to be worked are large. These conditions introduce a high risk of the destabilization of machining and of bringing about deterioration of the surface due to short circuits.

The invention incorporates means making it possible to guarantee the uniformity of the surface treatment over all the surface of the part-electrode immersed in the machining gap. One of these means consists of using another category of contaminant in suspension in the machining liquid, as disclosed in patents CH 627 393 or EP 0 314 711 cited by way of example. The mean size of particles intended for homogenization should preferably be smaller of an order of magnitude than the size of the machining gap. For this homogenization function, it is possible to use conducting powders of aluminium, iron or copper, or semiconducting powders such as graphite or carbon in various forms, as for example carbon microfibres described in document EP 1 127 647. The effect produced by such particles is known to enable more regular surface states to be obtained with shorter machining times. As far as the conditions for stirring the dielectric permit homogeneous stabilization of the mixture of distributions, sparking is distributed in a homogeneous manner over the surface. Similarly, since ignition delay times also have a more homogeneous distribution, the energy of discharges will also be more homogeneous.

The addition of a distribution of micrometric powders of graphite or aluminium participates in producing a deposit that is well distributed over the surface and this at all grades of surfaces, without influencing the quantity or the properties of the deposit produced from the materials of nanopowders and of dielectric liquid. These microparticles thus assist in defining the size of the ideal gap for homogenization of the process and moreover contribute to a further reduction in the energy of the spark while increasing the length of the column of the plasma of discharges and therefore the energy dissipated at the point of attachment of the sparks. Micrometric particles are less likely to participate in the transfer of material and the resolidification process and the formation of an amorphous alloy since this process occurs at the scale of the points where sparks are attached, of the order of a micron for finish machining.

By using for example a suspension of graphite with a mean diameter of 5 microns and nanopowders with a mean diameter of 80 nm, it was possible to obtain homogeneous deposits free from cracks, the nanopowders forming the essential part of the amorphous surface alloy, the second distribution of contaminant producing homogenization of the deposit on a macroscopic scale.

It is recommended according to the invention to use two types of particle of which the respective size distributions are clearly different: that is a nanometric distribution intended to create the alloy and a micrometric distribution depending on the machining gap imposed by the voltage conditions between the electrodes. Particles of the first type suspended in the dielectric liquid are characterized according to the invention by a mean diameter situated between 1 nanometre and 1 micrometre and preferably between 1 nanometre and 0.3 micrometre, whereas the distribution of the size of particles of the second type preferably has a mean diameter less than 50 micrometers and greater than 0.1 micrometres. The concentrations of said powders, as recommended by the invention, are situated between 0.1 g/l and 50 g/l in equivalent carbon volume. The powders can be provided for example from the following companies:
"Nanostructured & Amorphous Materials Inc." 820 Kristi Lane, Los Alamos, NM 87544 (http://www.nanoamor.com/)
"Inframat Advanced Materials LLC" 74 Batterson Park Road, Farmington, CT 06032 USA (http://www.advancedmaterials.us/).

As is known, micrometric powders intended to homogenize can, in some applications, be advantageously used as a coating to be applied to one or other of the electrodes. Various means are usually employed to cover an electrode with a micrometric powder. Devices can easily be obtained commercially for spraying suspensions of graphite powders of the Graphit 33 type (CRC Industries Deutschland GmbH) or aluminium powders (Alu spray A100, Weicon). Provision should be made to renew the deposit periodically according to the duration of the treatment. To this end, automatic functions of the machine will for example be used which will enable machining to stop at the end of a given time. For large size electrodes, systems that are most suitable are those for deposition by electrostatic spraying from a bath where the micrometric suspension is located.

From in particular experiments carried out at CRPP of the EPFL [A. Descoeudres et al. J. Phys. D: Appl. Phys. 38, 4066 (2005)], it is known that the removal of material mainly occurs at the end of the spark by an implosion effect of the plasma of the discharge in contact with molten metal and the effectiveness of the stripping of the crater essentially depends on the extinction slope of the current Δi/Δt preceding the passage of the spark current to zero. Thus, abrupt disappearance of the current is associated with a large removal of material. In the case of the present invention, this consists of minimizing this effect, since the mixture of nanoparticles with the material of the part can be destroyed.

Given that the removal of material is proportional to the implosion pressure of the plasma as it is extinguished, it is important to minimize this implosion pressure in order to enable the alloy to be formed in the resolidified layer. When implosion occurs, nanopowders in suspension are the first to be projected onto the part by the shock wave. The plasma pressure determines the degree of removal of molten material by the spark and therefore the quantity of alloy formed at the surface. This pressure is essentially proportional to the electron and ion density of the plasma and its temperature. ["Optical Spectroscopy of Electrical Machining Plasmas", thesis by A. Descoeudres, EPFL, 2006]. As the electron density can be modulated by the current of the discharge, low currents will make it possible to reduce the implosion pressure at extinction. In addition, the electronic density decreases with time during discharge by reason of the development of the plasma channel. The implosion pressure also falls with the duration of the discharge.

The optimum utilization of nanopowders necessarily involves the use of low energy regimes. It has been verified that the quantity of amorphous alloy falls with an increase in the energy of discharges and the use of too large energy discharges prevents formation of said alloys. Moreover, when an attempt is made to carry out machining with nanoparticles from rough machining regimes, the anticipated result is not obtained since the effect of particles derived from natural contamination produced during rough machining hides the effect of nanopowders in the final finishing. The dielectric must therefore of necessity be a true suspension of nanopowders associated with micrometric powders in a suspension or covering one or other electrode with a fine layer.

Low discharge energies favour the formation of the amorphous alloy. In the presence of short sparks with an identical duration, the concepts of energy and power are virtually equivalent. On the other hand, when discharges are involved that can be long and moreover of indeterminate duration, as is the case with discharges with spontaneous extinction, reference should be made to power. In a similar case, a relatively high current may be needed at the start of discharge in order to prevent any risk of extinction and the current is then slowly decreased in order to promote spontaneous extinction. As regards the quality of the alloy, it is then necessary to take into account the power used before extinction and not the total energy of the discharge which can be large. Spontaneous extinction naturally gives the optimum instantaneous energy (or power) for formation of the alloy.

Extinction of the electrical discharge machining plasma is normally brought about by switching off the external current supplying it. In this description, we shall choose to call "spontaneous extinction" extinction of the erosive discharge provoked by causes or conditions that are intrinsic to the plasma, as opposed to forced extinction that can usually be provoked by the behaviour of the electrical circuit connected to the terminals of the gap or under extreme conditions, which do not concern us here, by rapid separation of the electrodes.

According to the invention, it is proposed to exclude causes external to the plasma that are likely to force its extinction, this by choosing the essential parameters for the process, such as for example the values of the voltage, current, application sequences, wave forms, so as to promote the appearance of spontaneous extinction. The devices and methods enabling these choices to be made are set out below.

Among the external causes likely to force extinction are mainly: the action of switching off the current delivered by the source or of making it decrease too rapidly; short-circuiting the gap; or making or allowing the discharge circuit to oscillate.

Sparks with spontaneous extinction are characterized by low erosive power, which is favourable for the surface treatment method, but they also possess an unexpected advantage: it has been verified that a succession of sparks with spontaneous extinction do not strike in the same place which effectively participates in homogenizing the production of the amorphous alloy. Since the current coming from the source is insufficient and from the fact that extinction is moreover natural, this means that the point of attachment of the discharge becomes incapable of creating once again the necessary electron emission for maintaining the plasma [c.f. Current Zero Phenomena, G.A Farral, in "Vacuum Arcs", Wiley, 1980]. In this case, the probability of localization of sparks and decay in an arc is practically nil, all the more as other points of attachment are likely to appear elsewhere. This conjunction of probabilities is reinforced by the presence of microparticles everywhere other than in the zone where the spark has been extinguished. The use of microparticles associated with sparks with spontaneous extinction therefore makes it possible to guarantee the production of a homogeneous surface alloy on a surface free from defects associated with localization.

It is known, from the work cited above, that the extinction characteristics strongly depend, in a given dielectric, on the metals constituting the electrodes and that the stability of the electrical discharge machining arc depends on the energy passing through it. Mean durations will be found in the literature for plasmas measured in air or in a vacuum as a function of the current. As regards the particular case of the invention, where for example use is made of a couple of materials, copper-steel, immersed in an aqueous dielectric or one based on oils, it is possible to define a typical operational field experimentally in an approximate manner. It is possible to verify for example that it is practically impossible to maintain an electrical discharge machining plasma beyond a duration of 100 µs if it is supplied with a current less than 2 A. On the other hand, the probability of extinction of an arc with a duration limited to 100 ns, supplied with 4 A, is practically nil. In this way, an empirical field has been delimited by current values I < 5 [A] and pulse durations T < 2.I⁴[µs], a field in which spontaneous extinction is virtually impossible and makes it possible to define a first current pulse during which a calibrated fragment of metal is melted. This pulse is immediately followed without a pause by a second pulse characterized by a sufficient reduction of the current enabling the conditions to be created for spontaneous extinction within a period compatible with the method, namely a period typically less than 500 µs. The current pulse is therefore extended by an indeterminate period to the moment when the plasma is extinguished. As the teachings of George A. Farral also suggest, the probability of a plasma being extinguished strongly increases when the slope for the decrease of the current becomes greater. It is consequently possible to envisage the characteristics of the current pulse which enable the duration of the spark to be prolonged and spontaneous extinction of the plasma to be promoted.

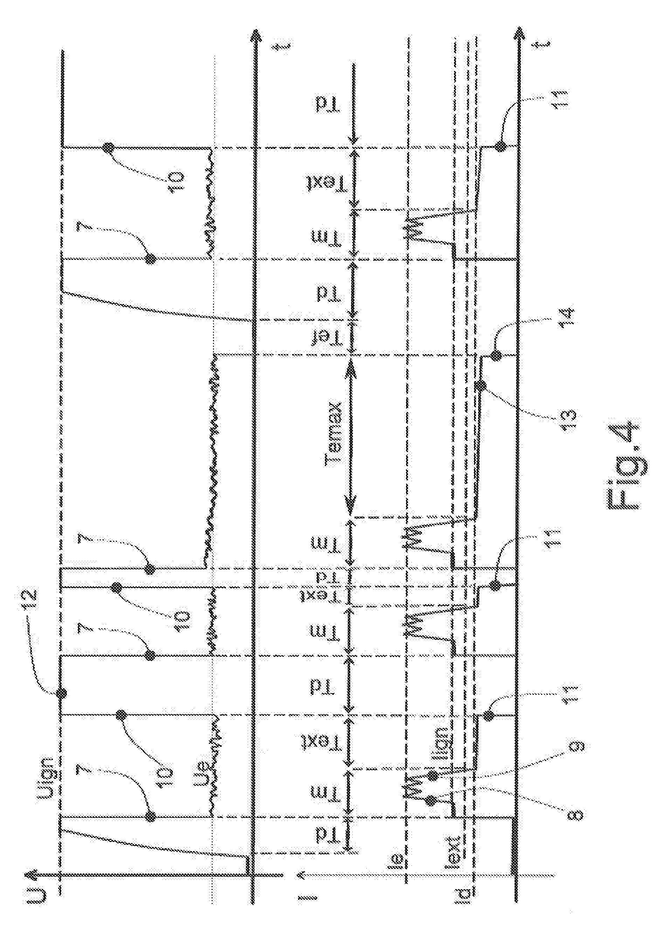

In order to carry out a surface treatment according to the invention, it is necessary that, at the start of the discharge, a fragment of metal is first of all melted before active contaminants become incorporated therein. During this period, the plasma must not be extinguished and hence the name "maintenance period" Tm given to this time lapse with a predetermined duration during which the value of the current is greater than a limit called the "extinction current" Iext (see Fig. 4).

The values of the couple of parameters Iext [A], Tm [µs] will be chosen within the typical field defined by current values I < 5 [A] and pulse duration Tm < 2×(Iext)⁴[µs], preferably Tm < 0.2×(Iext)⁴[µs]. The maintenance period Tm is usually preceded by a period Td with an indeterminate duration during which an ignition voltage Uign is applied to the terminals of the gap. The ignition delay period Td ends in a sudden fall 7 of the ignition voltage Uign to an arc voltage Ue, a fall which makes it possible to detect the moment of ignition.

The maintenance period Tm starts with a rise in the current of which the ideal form is well known. A first step Iign > Iext must be reached immediately in order to avoid the risk of extinction at the start of discharge. The current must then rise to its maximum following an optimum slope 8 which usually serves to limit wear. The maintenance period Tm finishes with a more or less abrupt descent of the current 9 to a value Id less than or equal to Iext so that spontaneous extinction of the plasma will becomes possible. This moment marks the start of period said to be an extinction period Text of indeterminate duration. The duration of extinction times Text being of a random nature, each successive Text sample should be measured and memorized.

It will of course be understood that current variations in the discharge circuit should not in any case bring about transitory oscillations which would be likely to produce premature extinction. Precautions should be taken in use so that in particular passage of the maximum maintenance current Ie to the value Id of the current at the start of the extinction period Text does not bring about extinction. This can be obtained, as a practical person will know, in particular by adapting the electrical parameters of the discharge circuit and by modulating the form of the current delivered by the source.

At the end of said maintenance period Tm the current discharge enters into the extinction period Text which should end, in the majority of cases, in spontaneous extinction of the plasma. Extinction conditions can be obtained during this period by maintaining a constant current but preferably by causing this current to decrease moderately, that is to say by limiting its descent slope to a value favourable for the formation of the amorphous alloy. This limiting value of Δi/Δt, according to experiments, should be less than 5 A per microsecond and preferably less than 1 A per microsecond.

Precautions having been taken in use to prevent extinctions provoked by causes extrinsic to the plasma, spontaneous extinction is distinguished and may be detected by the appearance, within a time lapse of the order of the time constant of the discharge circuit, of a sudden voltage increase 10 at the terminals of the gap accompanied by the disappearance of the machining current 11.

If the voltage source delivering the ignition voltage Uign before ignition has been kept connected to the machining gap, the appearance of said overvoltage will be followed at the terminals of the gap by a voltage being once again established to the value 12 of the ignition voltage Uign. Such a clear transition between the voltage of the plasma Ue and the igniton voltage Uign facilitates detection of spontaneous extinction.

If on the other hand the voltage source delivering the ignition voltage Uign before ignition has been disconnected, said overvoltage is followed by a return to zero volts or to the value of the internal voltage of the current source. In this latter case, if a sudden overvoltage is not detected but the current simply disappears, such extinction is not counted as spontaneous. The voltage source Uign should in this case be then reconnected so as to bring about the next ignition. This particular case is not shown in Fig. 4.

By reason of the noise present on the voltage signal Ue during erosive discharge, it is preferable to fix clear limits enabling spontaneous extinction to be distinguished with a minimum risk of error. It will be possible for example to select the following values for producing a detector: within a period of 200 ns the plasma voltage should have increased by at least 20% and the current passing through the gap fallen by at least 80% for extinction to be counted as spontaneous.

The cases 13 should also be specified where spontaneous extinction is not produced. A time Temax is observed beyond which extinction 14 is forced by short-circuiting the gap or by switching off its current supply during a period Tef.

But for this latter case where late extinctions require a pause Tef to be made, the method makes it possible for no pause to be made for most of the time. This constitutes an advantage from the point of view the yield of discharges since the gap is permanently supplied.

Special devices enabling the method to be implemented, including devices capable of promoting spontaneous extinction, are presented below. First of all it is necessary to measure two parameters representative of the state of the process: the rate of spontaneous extinctions TX and the mean duration Mtext of extinction periods Text of discharges.

In order to establish the rate of spontaneous extinctions TX, it is necessary to determine whether each successive extinction is a spontaneous extinction or not. Extinctions accompanied by a sudden overvoltage 7 and the disappearance of machining current 11 will be placed in the first category. All others, namely those with an excessive duration 13 and where it is necessary to extinguish them by external action, or those of which extinction is accompanied by the disappearance of current without the appearance of sufficient overvoltage, will be placed in the second category.

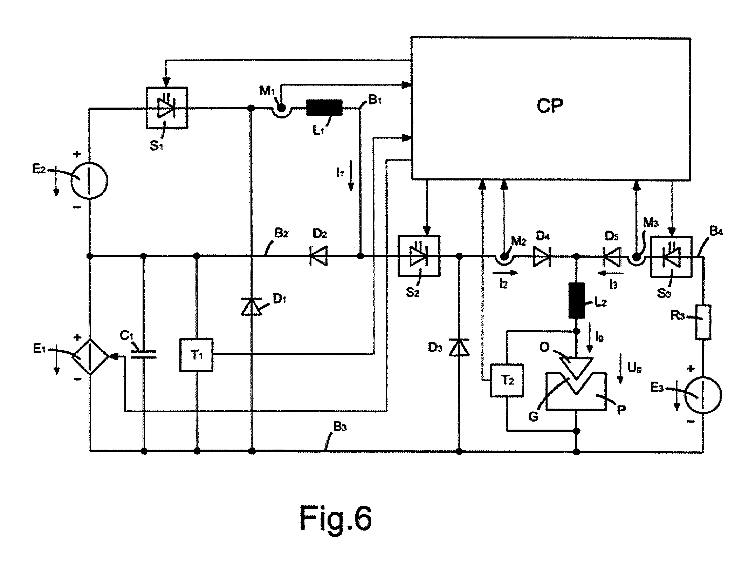

Let Nesp be the number of extinctions of the first category and Nreg the number of extinctions of the second category. By distinguishing a sufficient number of successive discharges, the quotient TXn = 100xNesp/(Nesp + Nreg), which can vary between 0 and 100, is periodically calculated. This calculation can be carried out by the control unit CP (c.f. Fig. 6), for example every hundred sparks.

Knowing how to detect the instant when spontaneous extinction is produced, it is easy to determine the duration Text of each discharge that has ended in spontaneous extinction and to calculate a mean Mtext of said durations for a large number of discharges. By varying certain characteristics of the current discharge during the extinction period Text, as for example the initial value Id of the current or its initial slope, it is found that it is possible to bring about spontaneous extinction of a more or less large part of the population of sparks or it is possible to vary the mean duration of discharges with spontaneous extinction.

With the current decaying according to a given decay function during the extinction period, it is possible to vary the initial value Id of the extinction current. It is then found that the number TX increases when Id falls and inversely. It is also found the mean duration Mtext falls when Id falls and inversely. It is therefore possible to use either TX or Mtext as indicators making it possible to adjust the current Id, or as regulating parameters for creating a regulator for the current Id.

With the extinction number TX chosen as a regulating parameter and a given current decay function for the current, operations proceed in the following manner as symbolized in the regulating diagram Fig. 5. A device 18 calculates the number of spontaneous extinctions TXn. A calculating device 15 calculates the arithmetic difference between a pre-established reference rate TXref of discharges with spontaneous extinction and the actual number TXn measured. A regulator 16 controls the increase or reduction of the current Id with an adjusting increment ΔId of a value usually adapted to the stability conditions of the regulator. If TXn < Txref, then ΔId < 0 and inversely. A device 17 generating a current Id performs the regulated variation which will produce a new value TXn+1. The regulating devices 15, 16, 17, 18 form part of the process control unit CP of Fig. 6. In this way it is possible to regulate the current Id at the start of the extinction period Text so as to establish and maintain a majority of spontaneous extinctions preferably close to 100%, for example 90%.

By choosing as a regulating parameter the mean duration Mtext of discharges with spontaneous extinction, with a given decay function for the current, the regulating operations proceed according to a similar model as the case previously detailed and illustrated in Fig. 5, knowing that the lower the initial current Id, the shorter the mean extinction period Mtext. It is possible to regulate the current Id at the start of the extinction period Text so as to establish and maintain the mean duration Mtext of discharges with spontaneous extinction around a pre-established value favourable to the process. In order to simplify the description, details of such a regulator have not been elaborated upon.

The establishment of said regulating parameters TX or Mtext in no way require short process times given that corresponding counter reactions should operate within periods of the order of hundreds or even thousands of discharges.

The decay law for the current during the extinction period Text may not be linear according to the devices used. With any current decay function it is nevertheless profitable to regulate the initial value of the current so as to obtain the same effects.

By adjusting the decay slope of the current it has been seen that it is possible to control the concentration of the alloy. From an initial fixed extinction current Id, it is then possible with this aim to vary the decay slope Δi/Δt of the current at the start of the extinction period Text. It is then found that the value TX increases when Δi/Δt decreases and inversely. It is also found that the mean duration Mtext increases when Δi/Δt decreases and inversely. It is therefore possible to use either TX or Mtext as indicators making it possible to adjust the decay slope Δi/Δt, or as regulating parameters in order to create a regulator for this slope.

On the same controller model as that symbolized in Fig. 5, the number of spontaneous extinctions TXn will be used as a regulating parameter for guiding a regulator that will progressively reduce or increase said slope Δi/Δt of the decay of current at the start of the extinction period, the initial current Id remaining fixed. By maintaining this slope at less than 5 A/µs, preferably less than 1 A/µs such a regulator makes it possible to maintain a number of spontaneous extinctions at a pre-established value close to 100%.

Similarly, a regulator based on the mean duration discharges Mtext during their extinction period, will progressively reduce or increase said slope Δi/Δt for the decay of the current at the start of the extinction period from a fixed initial current Id and will make it possible to maintain a mean duration close to an established reference value in advance which is favourable to the formation of the amorphous alloy. Similarly, in order not to overburden the description, details of these last two controllers have not been elaborated upon.

By controlling the extinction of discharges for a given condition of the process defining the final roughness and the gap, it is therefore possible to optimize production of the amorphous alloy at the surface of the part to be treated.

As regards devices making it possible to implement the method according to the invention, pulse generators may be mentioned as an example, such as those described in patent EP 1 063 043. The machining generator shown in Fig. 1 of this latter document and reproduced in Fig. 6 of the present document, comprises a device CP designed to control the process by collecting its various representative parameters. This generator is usually characterized by a voltage source E3, shown to the right of a machining gap G and which ensures ignition of the erosive discharges. This source E3 delivers a relatively high voltage, for example 200 V, when its current delivered 13 is nil. When ignition occurs, the voltage at the terminals of the gap G suddenly falls to the voltage of the electrical discharge machining plasma, for example 25 to 30 V. This fall makes it possible to detect ignition and to deliver in parallel with 13 in the machining gap a current 12 delivered by an actual current source shown to the left of the figure. This current source consists in particular of diodes D1, D2, D3, switches S1, S2, a self-induction coil L1 (induction coil) and two internal sources E1, E2, delivering relatively low voltages of approximately 3 to 30 V. It should be noted that this latter current source is designed with the aim of regulating a slope of current rise designed to limit wear to extremely low values but does not make it possible to generate any current forms.

In order to conform to the invention, and according to known practices, various sources together should be adapted in impedance to the discharge circuit which connects them to the gap. Moreover, the quality factor Q of the discharge circuit will be dimensioned so as to obtain very limited oscillations that do not cause current to pass below the natural extinction threshold Iext. The present invention is characterized by a particular sequence according to which the switches S2 and S3 are guided. This sequence is different from that shown in Fig. 8 of EP 1 063 043 where the switches S2 and S3 simultaneously block the currents I2 and I3, in this way forcing extinction of the electrical discharge machining plasma.

In a different manner, the present invention specifies, in a preferred embodiment, that the source called the ignition source E3 should continue to supply a small current I3 even if the current source itself has ceased to deliver its current I2. The electrical discharge machining plasma is used as a natural switch which shuts off the flow of current through the gap after an indeterminate period. The ignition phenomenon, as is traditionally made use of, acts in a similar manner as a natural switch that opens the passage to the current across the gap. From the point of view of electrical circuits, the invention thus proposes the use of the two transitions of this natural switch for opening as well as closing.

In the example of an embodiment shown in Fig. 6, the decay function of the current during the extinction period can be generated and controlled by the voltage source E3 which also ensures ignition of the erosive discharges. In this case, this latter source remains permanently connected on the gap unless it is necessary to force extinction of an excessively long discharge.

In more advantageous manner, it is possible to choose to generate and control the slope at the start of the decay function of the current with the aid of a current source designed to produce any current form such as described in document EP 1 493 522. In this case, the voltage source intended for ignition may possibly be disconnected after ignition so as not to add its current to that of the current source. Detection of extinction nevertheless remains possible, as mentioned above, by reason of the presence of an induction coil L2 in the line supplying the gap. This induction coil produces a momentary overvoltage when the plasma of the discharge is suddenly transformed into an isolating resistance at the moment of extinction.

Preparation of the dielectric liquid is an essential step in implementing the invention. It consists of incorporating into the liquid suitable quantities of different active contaminants while preventing the operator from having any contact with dry powders which can produce certain risks or trouble. This operation is largely facilitated by having available a paste that is soluble in the dielectric liquid and contains the appropriate mixture according to the desired type of alloy. This paste, provided in tubes or bottles or sealed cans is available in the form of precisely metered charges corresponding to a given volume of liquid to be prepared by a systematic method described in instructions enclosed.

Let us take the case of a 400 litre dielectric reservoir of an electrical discharge EDM sinking machine which has to be prepared with the aim of producing an amorphous tungsten alloy. The operator will use a concentrated charge consisting of one or more doses of a high density paste which he will incorporate in the liquid of the reservoir. Said charge will have been prepared, as an example, by the manufacturer from approximately one litre of standard dielectric such as FLUX ELF used as an excipient in which approximately 3600 g of nanometric tungsten powder and approximately 800 g of micrometric carbon powder are incorporated with the aid of a mechanical mixing device.

Having correctly diluted the charge with the dielectric liquid, it is equally important to use the latter with caution during surface treatment operations. That is to say the machining liquid must flow slowly and for this, movements of the electrode should be adjusted so as to maintain the homogeneity of the liquid inside the gap only by their action.

It should be understood that the various devices described above with the aim of implementing the surface treatment method are in no way limiting in character and they can receive any desirable modifications within the framework defined by the independent claims. Aqueous dielectrics can be used with surfactants or other additives which assist in stabilizing the dispersion of the mixture of nanopowders, for example alcohols, glycols or acetone. It is also possible to modulate the pH of water so as to reduce the attractive force of nanoparticles.

The surface treatment method described above is not limited to applications called sinking EDM where an electrode tool with a particular form enters an electrode part and imprints its geometry therein. It also applies to electrical discharge machining with the aid of an electrode wire or of a rotating electrode moving over a trajectory.

## Claims

1. Surface treatment method employing electrical discharges, of which the parameters are chosen so as to minimize the removal of material and to counteract the phenomenon of localization, discharges which strike in an intermediate space between a tool-electrode and a part-electrode, or gap, filled with a dielectric liquid and enabling defects to be eliminated associated with the residual white layer produced by electrical discharge machining during resolidification of part of the material melted by the erosive sparks and to obtain, at the surface of part-electrode, a non-crystalline amorphous structure that can replace all or part of said white layer,
said method being **characterized by** the use of two types of powder,
the first type consisting of nanometric sized particles,
the second type consisting of micrometric sized particles,
and the size distributions of the particles of the first and second types being different.

2. Method according to Claim 1, **characterized in that** the particles of the first type determine the appearance and nature of amorphous structure, are suspended in the dielectric liquid and have a mean diameter situated between 1 nanometre and 1 micrometre, preferably between 1 nanometre and 0.3 micrometre.

3. Method according to Claim 1, **characterized in that** the powders of the second type are intended for the homogenization of the surface treatment and consist of particles of graphite, carbon or of aluminium.

4. Method according to Claim 3, **characterized in that** the size distribution of the particles of the second type preferably has a mean diameter less than 50 micrometre and greater than 0.1 micrometre.

5. Method according to Claim 2, **characterized in that**
the concentrations of powders of the first and second type in the dielectric liquid are situated between 0.1 g/l and 50 g/l in equivalent carbon volume.

6. Method according to Claim 2, **characterized in that** the water-based dielectric contains at least one element belonging to the group Carbon, boron and Yttrium suspended in the form of fine nanometric particles.

7. Method according to Claim 1, **characterized in that** the electrical discharges are adjusted and/or controlled so as to promote the spontaneous extinction of the electrical discharge machining plasma, which is provoked by causes or conditions intrinsic to the plasma.

8. Method according to Claim 7, employing current discharges which immediately follow the instant the electrical discharge machining plasma is ignited, **characterized in that** said discharges comprise two successive periods, a first period (Tm) called a maintenance period, during which the current is greater than a limit (Iext), said period being sufficiently brief so that spontaneous extinction is not produced,
a second period (Text) or extinction time of indeterminate duration during which the current is less than the same limit (Iext) making spontaneous extinction possible,
the extinction times (Text) being measured and memorized as samples with a random distribution.

9. Method according to Claims 7 and 8, employing a discharge circuit which connects the machining source(s) to the machining gap, **characterized in that** the instant of spontaneous extinction is distinguished and can be detected by the appearance (10) of a sudden overvoltage of the electrical discharge machining plasma viewed at the terminals of the gap and accompanied by the disappearance (11) of the machining current, within a time lapse of the order of the time constant of said discharge circuit.

10. Method according to Claim 8, **characterized in that** the gap no longer receives current or is shortcircuited during a short period (Tef) if there is a risk of spontaneous extinction being produced late and the extinction period (Text) is extended beyond a period (Temax) beyond which it becomes necessary to force extinction.

11. Method according to Claims 8 and 9, performing the observation of a series of successive discharges, **characterized in that** account is taken of a rate of spontaneous extinctions TXn = 100×Nesp/(Nesp+Nreg), in which Nesp represents the number of spontaneous extinctions and Nreg the number of other types of extinctions.

12. Method according to Claims 8 and 9, performing the observation of a series of successive discharges, and **characterized in that** account is taken of a mean duration (Mtext) of extinction periods (Text) for discharges that have ended in spontaneous extinction.

13. Charge of particles for machining liquids intended for a surface treatment method by electrical discharge machining enabling defects to be eliminated associated with the white residual layer produced during resolidification at the surface of part of the material melted by erosive sparks, **characterized in that** it contains a mixture of at least one first powder consisting of fine particles of nanometric size and at least one second powder of which the size of the particles is different from the size distribution of the particles of nanometric size.

14. Charge of particles according to Claim 13, **characterized in that** the powder(s) of nanometric size consist(s) of particles with a mean diameter situated between 1 nanometre and 1 micrometre, preferably between 1 nanometre and 0.3 micrometre.

15. Charge of particles according to Claims 13 and 14, **characterized in that** it contains particles of carbon, graphite or aluminium of which the mean diameter is less than 50 micrometre and greater than 0.1 micrometre.

16. Charge of particles according to Claim 13, in the case where it is intended for the preparation of an aqueous dielectric liquid, **characterized in that** it contains fine nanometric particles of at least one element belonging to the group carbon, boron and yttrium.

17. Charge of particles according to Claims 13 to 16, **characterized in that** it is in the form of a thick paste consisting of a homogeneous mixture of various powders associated with at least one excipient soluble in the dielectric liquid to be prepared.

18. Device for implementing a surface treatment method carried out by applying electrical pulses between a tool-electrode and a part-electrode, separated by an intermediate space or gap filled with a dielectric liquid, comprising a regulating device and at least one ignition voltage source connected to the gap by a discharge circuit, the assembly being arranged with the aim of minimizing the removal of material and of homogenizing the surface treatment, said device being **characterized in that** it includes means for measuring, regulating and generating discharges which cooperate so as to promote spontaneous extinction of the electrical discharge machining plasma.

19. Device according to Claim 18, producing current discharges that immediately follow the instant of ignition of the electrical discharge machining plasma, **characterized in that** said discharges comprise two successive periods, a first period (Tm), called a maintenance period, during which the current is greater than a limit (Iext), said period (Tm) being sufficiently brief so that spontaneous extinction is not produced, a second period (Text) called an extinction period, with an indeterminate duration during which the current is less than or equal to the same limit (Iext) making spontaneous extinction possible.

20. Device according to Claim 18, **characterized in that** measuring means detect spontaneous extinction, that is to say the instant where extinction is provoked by causes or conditions intrinsic to the plasma, by the appearance (10) within a time lapse of the order of the time constant of the discharge circuit, of a sudden overvoltage of the electrical discharge machining plasma seen at the terminals of the gap accompanied by the disappearance (11) of the machining current.

21. Device according to Claims 19 and 20, **characterized in that** it measures the duration of the extinction period(Text).

22. Device according to Claim 21, **characterized in that** it ceases to supply the gap with current or short-circuits it during a short period (Tef) if spontaneous extinction risks being produced late and the extinction period (Text) is extended beyond a period (Temax) beyond which it becomes necessary to force extinction.

23. Device according to Claims 19, 20, 21 and 22, **characterized in that** the regulating means calculate a rate of spontaneous extinctions TXn=100×Nesp/(Nesp+Nreg) in which Nesp represents the number of spontaneous extinctions and Nreg the number of other type of extinction, one or other type of extinction appearing during a series of successive discharges.

24. Device according to Claims 19, 20 and 22, **characterized in that** it calculates a mean duration (Mtext) of discharges that have ended in spontaneous extinction, a mean obtained from the extinction periods (Text) of a series of successive discharges.

25. Device according to Claim 23, **characterized in that** it maintains or regulates the value (Id) of the current at the start of the extinction period (Text) so as to establish a rate of spontaneous extinctions (TXn) preferably close to 100%.

26. Device according to Claim 24, **characterized in that** it maintains or regulates the value (Id) of the current at the start of the extinction period (Text) so as to establish a mean duration (Mtext) of discharges that have ended in spontaneous extinction around a predetermined value favourable to the process.
